# EUROPÄISCHE PATENTSCHRIFT

(11) **EP 0 950 836 B1**
(45) Veröffentlichungstag und Bekanntmachung des Hinweises auf die Patenterteilung: **24.07.2002**
(21) Anmeldenummer: 99250116.3
(22) Anmeldetag: 13.04.1999
(51) Int. Cl.: F16H 57/02

(54) **Antriebseinheit in Baukastenform**
Modular drive unit
Unité motrice modulaire

(30) Priorität: 17.04.1998 DE 19817937; 26.05.1998 DE 19824670
(43) Veröffentlichungstag der Anmeldung: 20.10.1999
(73) Patentinhaber: Demag Cranes & Components GmbH, 58300 Wetter (DE)
(72) Erfinder: Vilain, Thomas, Dipl.-Ing., 46432 Velen (DE)
(74) Vertreter: Meissner, Peter E., Dipl.-Ing.

(56) Entgegenhaltungen:
- DE-A- 2 403 504
- US-A- 1 785 798

## Beschreibung

Die Erfindung betrifft eine Antriebseinheit gemäß dem Obergriff des Anspruchs 1.

Es ist allgemein bekannt, insbesondere zweistufige Hauptgetriebe mit Getriebevorstufen zu versehen, um die gewünschte Drehzahlübersetzung zu erreichen. Hauptgetriebe und Getriebevorstufe sind dabei häufig in einem eigenen Gehäuse untergebracht. Vor dem Zusammenbau der beiden Einheiten wird die Abtriebswelle mit dem fliegend angeordneten Abtriebsritzel in eine entsprechende Öffnung des Hauptgetriebes eingesteckt und die beiden Gehäuse fest miteinander verbunden. Im montierten Zustand kämmt das Abtriebsritzel mit dem Eingangszahnrad des Hauptgetriebes.

Eine Antriebseinheit mit ähnlichem Aufbau beschreibt das gattungsbildende Dokument US-A-1 785 798.

Nachteilig ist bei den bekannten Lösungen, daß der exakte Achsenabstand der Getriebewellen nur mit großem Aufwand sichergestellt werden kann, d.h. mit großen, zu den Wellen konzentrischen Gehäusepaßteilen oder mehreren Zentrierstiften. So beschreibt die DE 2403504 A1 beispielsweise eine Fixierung der Gehäuse zueinander mit wenigstens zwei Zentrierstiften.

Der Erfindung liegt die Aufgabe zugrunde, eine Antriebseinheit vorzuschlagen, die aus baukastenartig zusammenstellbaren und aneinander befestigbaren Baueinheiten besteht, die konstruktiv einfach ausführbar sind und deren Gehäuse auch durch Schrauben bei hinreichend exakter Einhaltung des Achsenabstands der kämmenden Zahnräder miteinander verbunden werden können.

Die Lösung dieser Aufgabe ist erfindungsgemäß durch die im Anspruch 1 angegebenen Merkmale gegeben. Durch die kennzeichnenden Merkmale der Unteransprüche 2 bis 4 ist die Antriebseinheit in vorteilhafter Weise weiter ausgestaltet.

Die Lösung sieht vor, daß die Gehäuse von jeweils zwei unmittelbar aufeinanderfolgenden Einheiten zu deren Ausrichtung jeweils eine einzige fluchtende parallel zu den Wellen ausgerichtete Zentrieröffnung aufweisen, deren Längsachse in Kraftflußrichtung gesehen mit der antreibenden Welle der vorgeordneten Einheit und der angetriebenen Welle der nachgeordneten Einheit in einer gemeinsamen Ebene liegt und in die ein Zentrierstift formschlüssig eingesetzt ist. Indem der jeweilige Zentrierstift, die Abtriebswelle und die Antriebswelle, deren Zahnräder miteinander kämmen, in eine gemeinsame Ebene gelegt werden, ergibt sich exakt der gewünschte Achsabstand für die Wellen der durch den Zusammenbau neu zusammengeschalteten Einheiten. Hierbei ist nur ein einziger kostengünstiger Zentrierstift erforderlich. Trotzdem können die Gehäuse der Einheiten mit den üblichen Befestigungsmitteln, insbesondere Schrauben, fest miteinander verbunden werden.

Eine hohe Kombinierbarkeit wird vorzugsweise dadurch sichergestellt, daß an jede Einheit wahlweise eine Vorgetriebeeinheit und eine Motoreinheit befestigbar ist, wobei deren Abtriebsritzel jeweils gleich dimensioniert und im befestigten Zustand an derselben Stelle der nachgeordneten Einheit positioniert sind.

Ein Ausführungsbeispiel der Erfindung ist in der Zeichnung dargestellt und wird nachfolgend näher beschrieben. Es zeigen:
- Fig. 1: eine Antriebseinheit mit einem Hauptgetriebe und einem Motor,
- Fig. 2: einen schematischen Querschnitt einer Antriebseinheit gemäß Fig. 1 mit Abtriebs- und Antriebswelle und einem einzigen Zentrierstift und
- Fig. 3: einen schematischen Querschnitt einer Antriebseinheit mit einem Hauptgetriebe mit Motor und einer zwischengeschalteten Getriebevorstufe.

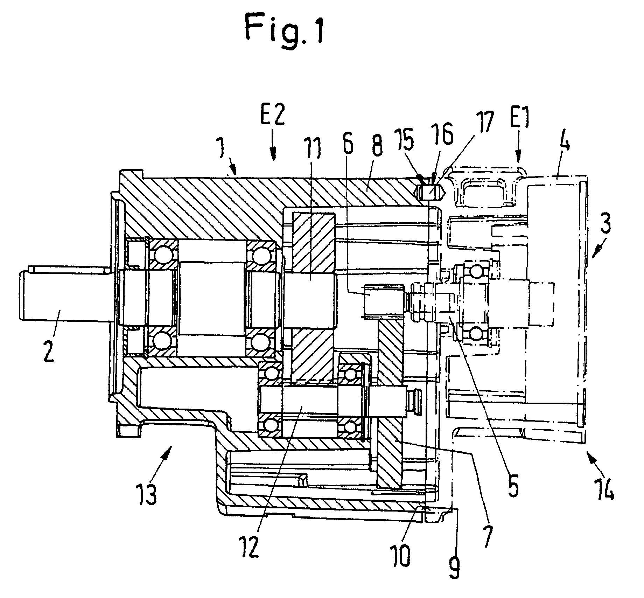

Fig. 1 zeigt eine Antriebseinheit in Baukastenform mit einem Hauptgetriebe 1 mit einer drehgelagerten Abtriebswelle 2 als erste Einheit E (Hauptgetriebeeinheit E2), an das in einer Reihe angeordnet ein Motor 3 als zweite Einheit E (Motoreinheit E1) auf der der Abtriebswelle 2 gegenüberliegenden Seite befestigt ist. Der Motor 3 ist von einem Gehäuse 4 aus Metallguß umschlossen, das eine Durchgangsöffnung aufweist durch die hindurch sich die Abtriebswelle 5 des Motors 3 in das Hauptgetriebe 1 hinein erstreckt. Auf der Abtriebswelle 5 befindet sich ein fliegend angeordnetes Abtriebsritzel 6, das mit dem Eingangszahnkranz 7 des Hauptgetriebes 1 kämmt.

Das Gehäuse 4 des Motors 3 ist mittels Schrauben als lösbare Befestigungselemente am ebenfalls aus Metallguß hergestellten Gehäuse 8 des Hauptgetriebes 1 befestigt, wobei die Gehäuse 4 und 8 des Hauptgetriebes 1 bzw. des Motors 3 jeweils mit einer Anschlußfläche 9 bzw. 10 versehen und bei aneinanderliegenden Anschlußflächen 9, 10 fest miteinander verbunden sind. Die beiden Getriebewellen 11, 12 und die Abtriebswelle 5 sind parallel zueinander ausgerichtet.

Weiter zeigt Fig. 1, daß die miteinander verbundenen Gehäuse 8, 4 im oberen Anlagebereich jeweils eine zylindrische fluchtende Zentrieröffnung 15 und 16 aufweisen, in die jeweils eine Hälfte eines gemeinsamen parallel zu den Getriebewellen ausgerichteten zylindrischen Zentrierstifts 17 formschlüssig eingesetzt ist. Die Längsachse des Zentrierstiftes 17 liegt mit der Abtriebswelle 5 des Motors 3 und der Antriebswelle 12 des Hauptgetriebes 1 in einer gemeinsamen Ebene.

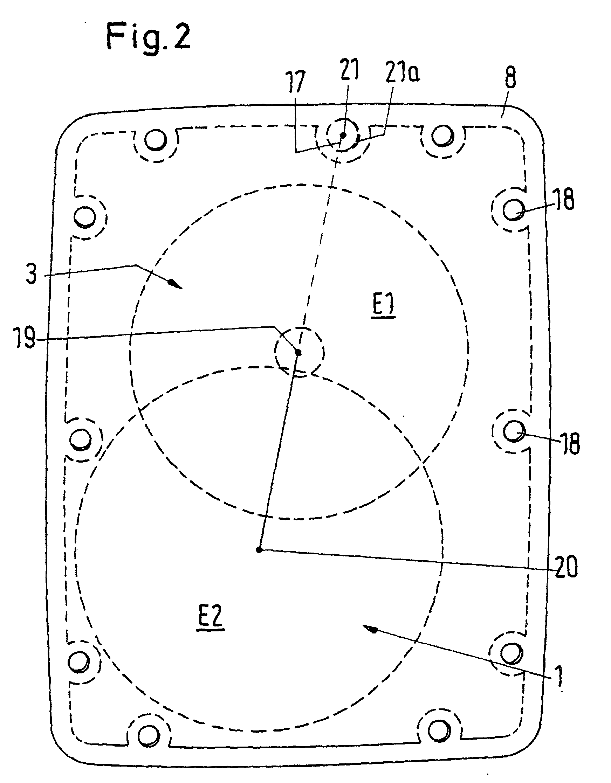

Fig. 2 zeigt eine schematischen Querschnitt der Antriebseinheit mit Sicht auf die Anlagefläche 10 des Gehäuses 8 mit den Befestigungsstellen 18 für die Schrauben. Weiter ist in Fig. 2 der einzige Zentrierstift 17 zu erkennen. Dargestellt sind außerdem die Drehachse 19 der Abtriebswelle 5 des Motors 3 sowie die Drehachse 20 der Antriebswelle 12 des Hauptgetriebes 1. Die Mittelachse 21 des zylindrischen Zentrierstiftes 17 ist ebenfalls eingezeichnet. Wie Fig. 2 zeigt, liegen die Drehachsen bzw. die Mittelachse 19, 20, 21 alle auf einer Linie.

Zwischen dem Motor 3 und dem Hauptgetriebe 1 können wahlweise als Vorgetriebeeinheiten E3 weitere Getriebevorstufen 21c angeordnet werden.

Unabhängig davon, wieviele Getriebevorstufen 21c an das Hauptgetriebe 1 angeschlossen werden, sind alle Getriebewellen 5, 11, 12 usw. parallel zueinander ausgerichtet. Der Motor 3 ist dann jeweils so angeschlossen, daß dessen Abtriebswelle 5 parallel zu den Getriebewellen 11, 12 usw. ausgerichtet ist. Jede der Einheiten E2, E1, E3 (Motor 3, Getriebevorstufen 21c, Hauptgetriebe 1) kann in einem eigenen Gehäuse 8, 4 usw. aus Guß untergebracht sein, wobei die Gehäuse 8, 4 usw. an Anschlußflächen 9, 10 usw. aneinander anliegend fest miteinander verbunden sind.

Bei wahlweiser Befestigung des Motors 3 oder einer Getriebevorstufe 21c sind die Abtriebsritzel 6 des Motors 3 bzw. der Getriebevorstufe 21c gleich dimensioniert. Der Motor 3 wird bei jeder Getriebeanordnung mit einer oder mehreren in einer Reihe hintereinander angeordneten Getriebevorstufen 21c in Kraftflußrichtung gesehen an der ersten Getriebevorstufe 21c befestigt.

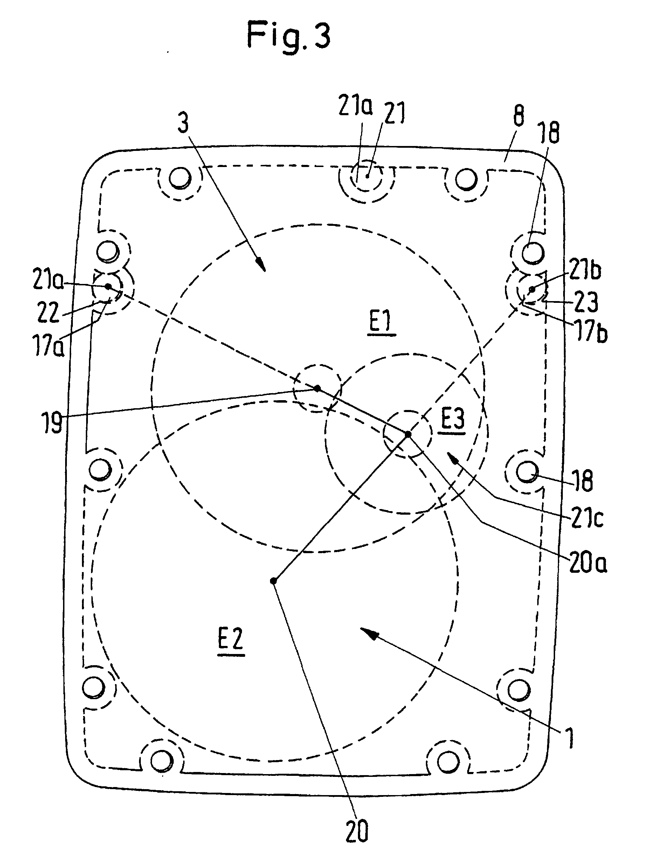

Fig. 3 zeigt ein schematische Darstellung eines Hauptgetriebes 1 (Drehachse 20) mit Motor 3 (Drehachse 19) entsprechend Fig. 2. Zusätzlich ist eine Getriebevorstufe 21c (Drehachse 20a) zwischengeschaltet.

Eingezeichnet ist in Fig. 3 nur das mit einer zweiten Zentrieröffnung 23 versehene Gehäuse 8; die erste Zentrieröffnung 21a mit der Mittelachse 21 wird bei Zwischenschaltung einer Getriebevorstufe 21c nicht genutzt.

Um den Motor 3 an der Getriebevorstufe 21c und die Getriebevorstufe 21c an dem Hauptgetriebe 1 zu befestigen und dabei den gewünschten Achsabstand der Wellen exakt einzustellen, wird bei je zwei miteinander verbundenen Gehäusen jeweils ein einziger entsprechend angeordneter Zentrierstift 17a, 17b bzw. verwendet.

Zum besseren Verständnis wurde die Zentrieröffnung 22 der Getriebevorstufe 21c mit in Fig. 3 eingezeichnet. Diese befindet sich an der dem Motor 3 zugewandten Anlagefläche des Gehäuses, sie ist also gegenüber der Zentrieröffnung 23 zum Motor 3 hin versetzt angeordnet.

Die beiden Zentrieröffnungen 21, 23 dienen dazu, wahlweise eine Getriebevorstufe 21c (Zentrieröffnungen 23) oder einen Motor 3 (Zentrieröffnungen 21a) am Hauptgetriebe 1 bei im montierten Zustand parallel zueinander angeordneten Abtriebswellen zu befestigen. In Fig. 3 ist die Drehachse 20a der Getriebevorstufe 21c parallel zur Position der Drehachse 19 des Motors 3 verschoben.

Die Getriebevorstufe 21c wird an dem Hauptgetriebe 1 befestigt und allein mittels des Zentrierstifts 17b zentriert, dessen Drehachse 21b mit den Drehachsen 20 und 20a auf einer Linie liegt.

Wird der Motor 3 mit der Getriebevorstufe 21c verbunden, erfolgt die Zentrierung wiederum mittels des Zentrierstifts 17a, dessen Mittelachse 21a wiederum mit den Drehachsen 19, 20a auf einer Linie liegt.

In einer räumlichen Darstellung liegen die Drehachsen 19 und 20a sowie die Mittelachse 21a bzw. 20, 20a sowie 21b jeweils in einer gemeinsamen Ebene.

Obwohl nur jeweils ein einziger Zentrierstift 17a, 17b bzw. bei je zwei miteinander verbundenen Gehäusen verwendet wird, können die insbesondere aus Metallguß gefertigten Gehäuse auch durch Schrauben miteinander verbunden werden, bei Vorhandensein eines für Schraubverbindungen typischen Spiels, und zwar mit hinreichend exakter Einhaltung des Achsenabstands. Bei der vorgeschlagenen Antriebseinheit haben kleine Verschiebungen der Gehäuseteile um den Zentrierstift 17a, 17b nur einen geringen Einfluß auf den Achsabstand. Das wiederum führt zu einer konstruktiven Vereinfachung der Einheiten E des Baukastens.

### Bezugszeichenliste:

- E: Einheit (Baukasteneinheit)
- E1: Motoreinheit
- E2: Hauptgetriebeeinheit
- E3: Vorgetriebeeinheit
- 1: Hauptgetriebe
- 2: Abtriebswelle
- 3: Motor
- 4: Gehäuse
- 5: Abtriebswelle des Motors
- 6: Abtriebsritzel
- 7: Eingangszahnkranz
- 8: Gehäuse
- 9: Anschlußfläche
- 10: Anschlußfläche
- 11: Getriebewelle
- 12: Antriebswelle
- 15: Zentrieröffnung
- 16: Zentrieröffnung
- 17: Zentrierstift
- 17a: Zentrierstift
- 17b: Zentrierstift
- 18: Befestigungsstelle
- 19: Drehachse der Abtriebswelle des Motors
- 20: Drehachse
- 20a: Drehachse
- 21: Mittelachse
- 21a: Zentrieröffnung
- 21b: Mittelachse
- 21c: Getriebevorstufe
- 22: Zentrieröffnung
- 23: Zentrieröffnung

## Patentansprüche

1. Antriebseinheit in Baukastenform mit in einer Reihe angeordneten, gehäusemäßig aneinander befestigten Einheiten, die antriebsmäßig mindestens eine drehgelagerte Welle aufweisen,
**dadurch gekennzeichnet,**
**daß** die Gehäuse (4, 8) von jeweils zwei unmittelbar aufeinanderfolgenden Einheiten (E1, E2) zu deren Ausrichtung jeweils eine einzige fluchtende parallel zu den Wellen (5, 12) ausgerichtete Zentrieröffnung (15, 16) aufweisen, deren Längsachse in Kraftflußrichtung gesehen mit der Achse der antreibenden Welle (5) der vorgeordneten Einheit (E1) und der Achse der nicht koaxial angetriebenen Welle (12) der nachgeordneten Einheit (E2) in einer gemeinsamen Ebene liegt und in die ein Zentrierstift (1/) formschlüssig eingesetzt ist.

2. Antriebseinheit nach Anspruch 1,
**dadurch gekennzeichnet,**
**daß** die Gehäuse (4, 8) der Einheiten (E1, E2) mittels lösbarer Befestigungselemente fest miteinander verbindbar sind.

3. Antriebseinheit nach einem der Ansprüche 1 oder 2,
**dadurch gekennzeichnet,**
**daß** die Einheiten (E) des Baukastens eine Hauptgetriebeeinheit (E2), mindestens eine vorschaltbare Vorgetriebeeinheit (E3) und eine Motoreinheit (E1) umfassen.

4. Antriebseinheit nach einem der Ansprüche 1 bis 3,
**dadurch gekennzeichnet,**
**daß** an jede Hauptgetriebeeinheit (E2) oder Vorgetriebeeinheit (E3) wahlweise eine Vorgetriebeeinheit (E3) und eine Motoreinheit (E1) befestigbar ist, wobei deren Abtriebsritzel (6) jeweils gleich dimensioniert und im befestigten Zustand an derselben Stelle der nachgeordneten Einheit (E2 oder E3) positioniert sind.

5. Antriebseinheit nach einem der Ansprüche 1 bis 4,
**dadurch gekennzeichnet,**
**daß** der Zentrierstift (17) zylinderförmig ist.

## Claims

1. Drive unit in modular form having units, which are disposed in a row and secured to each other in a housing-wise manner, said units having at least one rotary-mounted shaft, in respect of the drive,
***characterised in that***
the housings (4, 8) of respectively two directly successive units (E1, E2) have for their orientation respectively one single flush centring opening (15, 16) which is orientated parallel to the shafts (5, 12), the longitudinal axis of which centring opening, seen in the power flow direction, lies in a common plane with the axis of the actuating shaft (5) of the pre-disposed unit (E1) and the axis of the non-coaxially actuated shaft (12) of the post-disposed unit (E2) and in which opening a centring pin (17) is inserted in a form-fitting manner.

2. Drive unit according to claim 1,
***characterised in that***
the housing (4, 8) of the units (E1, E2) are connectable to each other in a fixed manner by means of detachable securing elements.

3. Drive unit according to one of the claims 1 or 2,
***characterised in that***
the units (E) of the module of a main transmission unit (E2) comprise at least one pre-connectable pre-transmission unit (E3) and an engine unit (E1).

4. Drive unit according to one of the claims 1 to 3,
***characterised in that**,*
on each main transmission unit (E2) or pre-transmission unit (E3), a pre-transmission unit (E3) and an engine unit (E1) are optionally securable, their driving gears (6) respectively being dimensioned identically and being positioned in the secured state at the same position of the post-disposed unit (E2 or E3).

5. Drive unit according to one of the claims 1 to 4,
***characterised in that***
the centring pin (17) is cylindrical.

## Revendications

1. Unité motrice modulaire comportant des unités disposées en série et fixées l'une à l'autre par leurs carters, lesdites unités présentant pour la transmission au moins un arbre monté rotatif,
**caractérisée en ce que**, à chaque fois, les carters (4, 8) de deux unités (E1, E2) immédiatement adjacentes dans l'alignement présentent, à chaque fois, une unique ouverture de centrage (15, 16) alignée et dirigée parallèlement aux arbres (5, 12), dont l'axe longitudinal, vu en direction de la transmission des efforts, se trouve dans un plan commun avec l'axe de l'arbre entraînant (5) de l'unité amont (E1) et avec l'axe de l'arbre entraîné non coaxial (12) de l'unité aval (E2) et dans laquelle est placée, par adaptation de forme, une cheville de centrage (17).

2. Unité motrice selon la reventication 1,
**caractérisée en ce que** les carters (4, 8) des unités (E1, E2) sont rigidement assemblables l'un à l'autre au moyen d'éléments de fixation amovibles.

3. Unité motrice selon l'une des revendications 1 ou 2,
**caractérisée en ce que** les unités (E) du module comportent une unité principale d'entraînement (E2), au moins une unité de préentraînement précouplable (E3) et une unité à moteur (E1).

4. Unité motrice selon l'une des revendications 1 à 3,
**caractérisée en ce que**, à chaque unité principale d'entraînement (E2) ou à chaque unité de préentraînement (E3) peut être fixée, au choix, une unité de préentraînement (E3) et une unité à moteur (E1), les pignons de sortie (6) étant, à chaque fois, dimensionnés de façon identique et positionnés, à l'état fixé, à la même place de l'unité aval (E2 ou E3).

5. Unité motrice selon l'une des revendications 1 à 4,
**caractérisée en ce que** la cheville de centrage (17) est de forme cylindrique.
